Europäisches Patentamt

European Patent Office

Office européen des brevets

(11) Veröffentlichungsnummer: **0 376 144**
**A1**

## (12) EUROPÄISCHE PATENTANMELDUNG

(21) Anmeldenummer: 89123557.4

(22) Anmeldetag: 20.12.89

(51) Int. Cl.⁵ **G01F 1/68, G01P 5/12, F02D 41/18**

(30) Priorität: 24.12.88 DE 3843746

(43) Veröffentlichungstag der Anmeldung:
04.07.90 Patentblatt 90/27

(84) Benannte Vertragsstaaten:
AT BE CH DE ES FR GB GR IT LI LU SE

(71) Anmelder: Degussa Aktiengesellschaft
Weissfrauenstrasse 9
D-6000 Frankfurt am Main 1(DE)

(72) Erfinder: Diehl, Walter, Dr. Dipl.-Phys.
Gustav-Adolf-Strasse 29
D-6450 Hanau 1(DE)
Erfinder: Eckert, Karlheinz, Dipl.-Ing.
Wibaustrasse 10
D-6466 Gründau 2(DE)
Erfinder: Hohenstatt, Martin, Dr. Dipl.-Phys.
Unter den Weingärten 9
D-6451 Hammersbach(DE)
Erfinder: Link, Dieter, Dipl.-Ing.
August-Bebel-Strasse 1
D-6450 Hanau 11(DE)
Erfinder: Prokopec, Otokar
Hindemithstrasse 44
D-6450 Hanau 1(DE)

(74) Vertreter: Stoffregen, Hans-Herbert, Dr.
Dipl.-Phys.
Salzstrasse 11a
D-6450 Hanau/Main 1(DE)

(54) **Anemometer.**

(57) Es wird ein Anemometer mit einem aus Glasmaterial bestehenden Substrat (12) vorgeschlagen, dessen Länge L erheblich größer als die Breite B und die Dicke D ist. Die Randbereiche (20, 22) des Substrats (12) werden durch Ausbildung des Flächenwiderstandes im wesentlichen nicht erwärmt.

FIG.1

## Anemometer

Die Erfindung bezieht sich auf ein Anemometer zur Mengenmessung von Gasen oder Flüssigkeiten, insbesondere zur Bestimmung einer durch einen Kanal angesaugten Luftmenge einer Brennkraftmaschine, mit einem in dem Kanal angeordneten, quaderförmig ausgebildeten Substrat geringer Wärmeleitfähigkeit, mit einem auf zumindest einer Fläche des Substrats auf gebrachten temperaturabhängigen Flächenwiderstand, Stromzu- und -abführungen zu dem Flächenwiderstand sowie einer Halterung für das Substrat.

Um insbesondere bei Brennkraftmaschinen einen optimalen Verbrennungsablauf zu erzielen, müssen genaue Informationen über die jeweils angesaugte Luftmenge zur Verfügung stehen. In Abhängigkeit davon können der Zündzeitpunkt, die einzuspritzende Kraftstoffmenge und ähnliches geregelt werden.

Anemometer gibt es in verschiedenster Bauart. Dabei arbeiten gängige Anemometer nach dem Konstanttemperatur-Verfahren, wie es z.B. der DE-AS 26 49 040 zu entnehmen ist. Zur Bestimmung der Luftmengenmessung wird eine Brückenschaltung benutzt, in der sich ein temperaturabhängiger Widerstand befindet. Dieser wird elektrisch beheizt und der Strömung des zu messenden Fluids ausgesetzt. Eine elektrische Regelschaltung sorgt dafür, daß der beheizte elektrische Widerstand auf eine konstante Temperatur geheizt wird. Die Messung des Stroms durch die Brücke erlaubt Rückschlüsse auf die an dem Widerstand vorbeiströmende Luftmenge. Dabei kann zur Kompensation des Einflusses der Temperatur der Ansaugluft ein zweiter temperaturabhängiger Widerstand in einen zweiten Brückenzweig geschaltet werden.

Durch u.a. die Ausbildung der temperaturabhängigen Widerstände und deren Anordnung in bezug auf den Luftstrom soll eine zeitliche Veränderung der Kennlinien verhindert werden. Durch Wahl und Gestaltung des den Widerstand tragenden Substrats soll sichergestellt werden, daß thermische Trägheiten des Substrats weitgehend ausgeschlossen werden, um eine schnelle Erfassung der Luftmenge bzw. Änderungen davon zu gewährleisten.

Hinsichtlich der Stromzu- und -abführungen ist zu bemerken, daß diese z.B. in Form von Drähten oder durch Löten oder Leitkleber mit einer leitfähigen Halterung ausgebildet sein können.

Es ist daher Aufgabe der vorliegenden Erfindung, ein Anemometer der eingangs genannten Art so weiterzubilden, daß sich bei Änderung der Strömungsgeschwindigkeit nahezu trägheitslos ein stabiler Temperaturzustand des temperaturabhängigen Flächenwiderstands einstellt.

Die Aufgabe wird erfindungsgemäß im wesentlichen dadurch gelöst, daß das Substrat aus einem Glasmaterial besteht, daß die Länge L und die Breite B des Substrats erheblich größer als dessen Dicke D ist und daß die halterungsseitigen Randbereiche des Substrats durch den Flächenwiderstand im wesentlichen nicht erwärmbar sind.

Durch die Kombination von zum Teil bekannten Merkmalen wird ein Anemometer zur Verfügung gestellt, das einen temperaturabhängigen Flächenwiderstand aufweist, bei dem sich ein stabiler Temperaturzustand überaus schnell einstellt. Hierzu trägt einen wesentlichen Anteil die Dimensionierung des Substrats. Da die Substratdicke sehr klein im Vergleich zur Länge und Breite ist, wird erreicht, daß bei Änderung der Strömungsgeschwindigkeit sich schnell ein stabiler Temperaturzustand einstellt, obwohl das Glas ein schlechter Wärmeleiter ist. Durch die geringe Wärmeleitfähigkeit des Substrats in Kombination mit dem unbeheizten Randbereich wird bewirkt, daß keine Wärme an die Halterung abfließt: die aus dem beheizten Bereich in den Randbereich abfließende Wärme wird im wesentlichen an das Fluid abgegeben und nicht über Wärmeleitung in den schmalen Streifen des Randbereichs transportiert, wo dieser Kontakt mit der Halterung hat. Dadurch, daß die halterungsseitigen Randbereiche des Substrats durch den Flächenwiderstand nicht erwärmbar sind, gleichwenn die gesamte Substratfläche mit dem Widerstandsmaterial behaftet ist, ist des weiteren gewährleistet, daß ein Wärmeabfluß über die Randbereiche an die Halterung selbst weitgehend ausgeschlossen ist.

Bevorzugterweise ist die Länge L 5 - 10mal größer als die Breite B, die ihrerseits vorzugsweise 10 - 30mal größer als die Dicke D gewählt ist. Selbstverständlich besteht auch die Möglichkeit, die Fläche quadratisch zu wählen, wobei bevorzugte Dicken des Substrats in der Größenordnung zwischen 100 und 200μm liegen.

In hervorzuhebender Ausgestaltung ist vorgesehen, daß die vorzugsweise ganzflächig mit dem Flächenwiderstandsmaterial versehene Substratfläche parallel zu den halterungsseitigen Randbereichen Isoliertrennlinien aufweist, wodurch zusätzlich sichergestellt ist, daß ein Wärmefluß zu den Halterungen hin nicht erfolgt.

Eine weitere Ausführungsform sieht vor, daß im Bereich des unbeheizten Rands die Platinschicht teilweise entfernt ist und nur so viel stehen bleibt, daß Kontaktierung möglich ist. Es muß allerdings darauf geachtet werden, daß dadurch nicht ein nennenswerter Widerstand im Randbereich und damit eine Heizung erzeugt wird.

Eine unerwartete Optimierung der Eigenschaften zur Erzielung einer trägheitslosen Einstellung eines stabilen Temperaturzustandes ergibt sich dann, wenn die Fläche des stromführenden vorzugsweise eine Mäanderstruktur aufweisenden Flächenwiderstandes zu den Flächen, die nicht beheizt werden, sich verhalten wie 3 : 1 bis 1 : 1.

Das Material des Flächenwiderstandes wie Platin selbst ist vorzugsweise durch Sputtern auf die Substratfläche aufgebracht. Dabei können selbstverständlich auf gegenüberliegenden Flachseiten des Substrats Flächenwiderstände angeordnet werden, wobei ebenfalls die Randbereiche von den den Strom führenden Flächen getrennt bzw. im Bereich der Stromzu- und -abführung Bereiche entfernt sein können bzw. im Bereich der Anströmkante eine Beheizung nicht erfolgt.

Nach einer weiteren Ausführungsform wird vorgeschlagen, daß der Ausdehnungskoeffizient des Substrats in etwa 7 bis 10 x $10^{-6}/°$ K beträgt. Bevorzugterweise weist das Material des Flächenwiderstandes in etwa den gleichen Ausdehnungskoeffizienten wie das Substrat auf.

Um die Wärmeleitfähigkeit des Substrats weiter zu reduzieren, kann dieses aus mehreren Glasschichten zusammengesetzt sein, die mittels eines Klebers verbunden sind, dessen Wärmeleitfähigkeit geringer als das der zu verbindenden Materialien ist. Es ergibt sich folglich eine Sandwichstruktur, die bei überaus geringer Wärmeleitfähigkeit dennoch eine hinreichende Eigenstabilität des Substrates zur Aufnahme des bzw. der Flächenwiderstände sicherstellt.

Schließlich kann das Substrat auch einseitig gehaltert bzw. kontaktiert werden.

Nach einem weiteren hervorzuhebenden Vorschlag ist vorgesehen, daß das Substrat in einem schmalen Streifen längs der Anströmkante nicht beheizt, z.B. dadurch, daß die anströmkantenseitige, also erste Mäanderbahn etwas zurückgesetzt ist. Günstig ist weiterhin, wenn das Platin dort auch noch entfernt ist. Durch die schlechte Wärmeleitung des Substrats bleibt es dort relativ kalt. Es findet kaum ein Wärmeübergang auf das Fluid statt. Somit kann Verschmutzung, die sich vornehmlich auf der Anströmkante widersetzt, den Wärmeübergang an das Fluid nicht beeinflussen. Die Breite des Streifens längs der Anströmkante, der nicht beheizt wird, ist sehr viel kleiner als die Breite B des Substrats; sie stehen vorzugsweise im Verhältnis von kleiner 1 : 10.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von in der Zeichnung dargestellten Ausführungsbeispielen.

Es zeigen:

Fig. 1 eine Draufsicht eines mit einem Flächenwiderstand versehenen Substrats,

Fig. 2 eine Seitenansicht des Substrats nach Fig. 1,

Fig. 3 eine weitere Ausführungsform eines Substrats und

Fig. 4 und 5 Ausgestaltungen von Stromzuführungen.

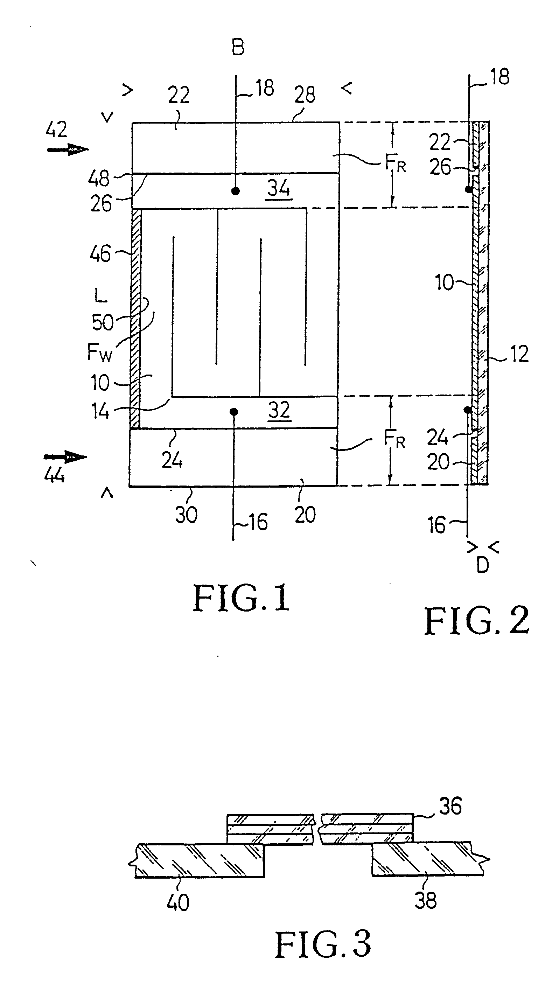

In Fig. 1 ist eine Draufsicht auf einen temperaturabhängigen Flächenwiderstand (10) wiedergegeben, der auf einem Substrat (12) im wesentlichen ganzflächig angeordnet ist. Das Material des Flächenwiderstandes kann z.B. aus Platin bestehen und ist durch Sputtern auf die Substratfläche aufgebracht worden. Durch z.B. Ätztechnik oder Durchtrennen mittels Laserstrahls werden mäanderförmig verlaufende Strombahnen (14) eingeprägt, durch die der über die Anschlüsse (16) und (18) zugeführte Strom fließt, um so eine gewünschte Erwärmung des Flächenwiderstandes (10) und damit des Substrats (12) zu bewirken. Die Breite der Strombahnen (14) ist im Vergleich zu der der Anschlußbahnen (32) und (34) sehr gering. In letzteren ist eine Erwärmung aufgrund des geringeren Widerstandes vernachlässigbar klein. Die Randbereiche (20) und (22) des Flächenwiderstandsmaterials sind elektrisch von dem stromzuführenden Bereich durch eine Isoliertrennlinie (24) bzw. (26) getrennt. Wärme, die in den Strombahnen (14) erzeugt wird, kann nicht über die Randbereiche abfließen.

Damit eine nahezu trägheitslose Temperatureinstellung erfolgt, weist das Substrat (12) in bezug auf seine Länge L, Breite B und Dicke D eine Dimensionierung auf, daß die Dicke D überaus gering im Vergleich zu der Länge L und der Breite B ist. Vorzugsweise ist die Dicke D 10 - 30mal geringer als die Breite B, die ihrerseits 5 - 10mal kleiner als die Länge L sein kann. Selbstverständlich besteht auch die Möglichkeit, Länge und Breite gleich zu wählen. Bei einer quadratischen Ausführungsform können Länge L und Breite B jeweils 1mm, die Dicke D kleiner als 200$\mu$m, vorzugsweise zwischen 100 und 150$\mu$m gewählt werden. Bei einer Rechteckform kann sich die Länge auf 10mm und die Breite 2mm bei unveränderter Dicke D zwischen 100 und 150$\mu$m belaufen. Andere Dimensionierungen sind gleichfalls möglich, wobei jedoch erwähntermaßen darauf zu achten ist, daß die Dicke D überaus gering im Vergleich zu der Länge L und der Breite B ist.

Eine Optimierung der Anordnung ergibt sich des weiteren dann, wenn die stirnseitigen nicht erwärmten Bereiche $F_R$, die sich aus den Anschlußbahnen (32) und (34) und den Bereichen zusammensetzen, durch die Isoliertrennlinien (24) und (26) und den Stirnseiten (28) und (30) erstrecken, sich zu der wirksamen Flächenwiderstandsfläche $F_W$ verhalten wie $F_W$ zu $2F_R$ in etwa 3 : 1 bis 1 : 1.

Selbstverständlich sind die Isoliertrennlinien (24), (26) zwingend nicht notwendig.

Bei dem Substrat (12) handelt es sich um ein Material überaus geringer Wärmeleitfähigkeit. Vorzugsweise besteht das Substrat (12) aus Glas mit einer Wärmeleitfähigkeit von 0,8 - 1,3 W/m.K.

Zur Dimensionierung ist noch zu bemerken, daß der parallel zu den Stirnflächen (28) und (30) verlaufende Strompfad (32) bzw. (34), der mit den elektrischen Anschlüssen (16) und (18) verbunden ist, eine Breite von 0,5 mm aufweisen kann, wohingegen die Breite der Randstreifen (20) und (22) im Bereich 0,5 bis 2,5 mm liegen kann.

Der Fig. 1 ist ein weiteres hervorzuhebendes Merkmal zu entnehmen. Wie durch die Pfeile (42) und (44) angedeutet werden soll, wird das Substrat von links angeströmt. D.h., das Fluid prallt auf den linken Längsrand (48). Erfindungsgemäß ist nun vorgesehen, daß sich in diesem Randbereich, also entlang der Anströmkante (48) ein nicht beheizter Streifen (46) befindet, der sich zumindest im Bereich der mäanderförmig verlaufenden Strompfade (14) erstreckt. Dies kann dadurch erzielt werden, daß die anströmkantenseitige, also die erste Mäanderbahn (50) etwas zurückgesetzt ist. Dies kann durch Anbringen einer nicht näher bezeichneten Trennlinie erfolgen. Günstig kann es auch sein, wenn in diesem Bereich das aufgesputtete Material, also im Ausführungsbeispiel das Platin entfernt ist. Durch die Ausbildung des schmalen Streifens, der sich erwähntermaßen bis zu den Stirnseiten (28) und (30) erstrecken kann, bleibt das Substrat aufgrund der schlechten Wärmeleitung relativ kalt. Es findet also kaum ein Wärmeübergang auf das Fluid statt. Somit können Verschmutzungen, die sich vornehmlich auf der Anströmkante (48) ablagern, den Wärmeübergang an das Fluid nicht beeinflussen. Im Vergleich zum Stand der Technik mit gut wärmeleitendem Substrat muß folglich keine zusätzliche wärmeisolierende Schicht aufgebracht werden bzw. es ist nicht erforderlich, daß die erste Mäanderbahn mehrere Millimeter von der Anströmkante zurückversetzt wird. Letzteres würde den Wärmeübergang absolut (Grenzschichtform) reduzieren und damit die Ansprechzeit verlängern.

In Fig. 3 ist eine weitere Ausführungsform eines Substrats (36) zur Aufnahme eines Flächenbzw. Schichtwiderstandes dargestellt. Das Substrat (36) besteht aus übereinander angeordneten Schichten niedriger Wärmeleitfähigkeit wie z.B. Glasplatten, die untereinander mit einem Klebstoff verbunden sind, deren Wärmeleitfähigkeit noch geringer als das von Glas ist. Die einzelnen Glasplatten weisen dabei eine Stabilität auf, die für sich nicht ausreichen würde, um mit einem Flächenwiderstand in z.B. einem Ansaugkanal eines Verbrennungsmotors angeordnet zu werden. Durch den Schichtaufbau ergibt sich jedoch die erforderliche Stabilität, wobei die Gesamtwärmeleitfähigkeit des Substrats (36) durch die Kleberschichten weiter reduziert wird. Ferner erkennt man, daß das Substrat (36) auf Halterungen (38) und (40) abgestützt ist.

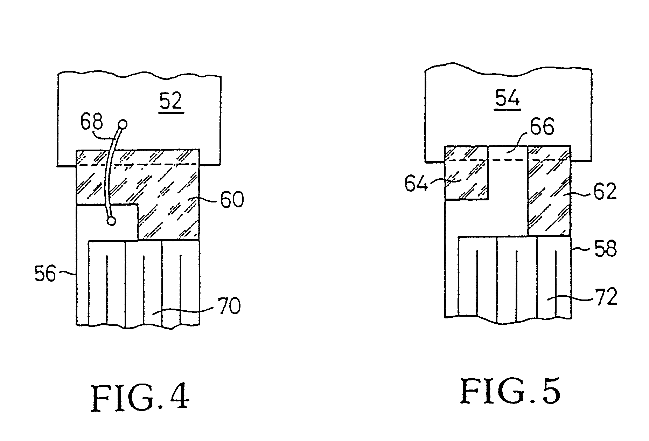

In den Fig. 4 und 5 sind Beispiele von Kontaktierungen zwischen Halterungen (52) bzw. (54) und einem mit einem Flächenwiderstand versehenen Substrat (56) bzw. (58) dargestellt. Die in der Zeichnung schraffiert dargestellten Bereichen (60), (62) und (64) weisen kein auf das Substrat (56) bzw. (58) aufgebrachtes Material auf. Die Kontaktierung erfolgt dann von den mit dem Material versehenen Bereichen über z.B. einen Draht (68) oder über eine Lötung bzw. Klebung mit Leitkleber (66). Die Fläche der entfernten Bereiche (60) bzw. (62) und (64) muß dabei so gewählt sein, daß unmittelbar im Bereich der Kontaktierung kein nennenswerter Widerstand und damit eine Aufwärmung erzeugt wird. Diese wird vielmehr ausschließlich in den mäanderförmig strukturierten Flächenwiderständen (70) und (72) erzeugt.

Bei einem Einsatz der erfindungsgemäßen Ausbildung von Substrat (12) mit auf diesem ganzflächig aufgebrachtem Flächenwiderstand (10) und den aus gleichem Material bestehenden Randabschnitten (20) und (22) in einem Anemometer kann der temperaturabhängige Widerstand in einen Brückenzweig angeordnet werden, um in Abhängigkeit von der Abstimmung der Brücke derart mit Strom beaufschlagt zu werden, daß die Temperatur konstant ist. Der hierzu erforderliche Strom stellt dann ein Maß für die an dem temperaturabhängigen Widerstand (10) vorbeiströmende Luftmenge dar. Die hierzu erforderlichen Regeleinrichtungen für die elektrische Leistung und Signalverwertung können üblicher Bauart sein.

## Ansprüche

1. Anemometer, insbesondere zur Bestimmung einer durch einen Kanal strömenden Luftmenge einer Brennkraftmaschine, mit einem in dem Kanal angeordneten, quaderförmig ausgebildeten Substrat geringer Wärmeleitfähigkeit, mit einem auf zumindest einer Fläche des Subtrats aufgebrachten temperaturabhängigen Flächenwiderstand, Stromzu- und -abführungen zu dem Flächenwiderstand sowie einer Halterung für das Substrat, **dadurch gekennzeichnet,** daß das Substrat (12) aus einem Glasmaterial besteht, daß die Länge L und die Breite B erheblich größer als die Dicke D des Subtrats sind und daß der halterungsseitige Randbereich (20, 22) des Substrats durch den Flächenwiderstand im wesentlichen nicht erwärmbar sind.

2. Anemometer nach Anspruch 1,

**dadurch gekennzeichnet,**

daß die den Flächenwiderstand (10) aufweisende Substratfläche im wesentlichen ganzflächig mit dem Material des Flächenwiderstandes bedeckt ist, wobei im Abstand zur jeweiligen Stirnseite (28, 30) vorzugsweise eine Isoliertrennlinie (24, 26) verläuft bzw. im Bereich der Stromzu- und -abführungen (16, 18, 66, 68) das Material entfernt ist.

3. Anemometer nach zumindest einem der vorhergehenden Ansprüche,

**dadurch gekennzeichnet,**

daß die Fläche $F_W$ des wirksamen Flächenwiderstandes zu den nicht erwärmbaren Stirnrandflächen $F_R$ sich verhalten wie $F_W : 2F_R$ in etwa 3 : 1 bis 1 : 1.

4. Anemometer nach zumindest Anspruch 1,

**dadurch gekennzeichnet,**

daß der Ausdehnungskoeffizient des Substrats (12) in etwa 7 bis 10 x $10^{-6}/°$ K beträgt.

5. Anemometer nach zumindest einem der vorhergehenden Ansprüche,

**dadurch gekennzeichnet,**

daß das Substrat (12) und das Material des Flächenwiderstandes (10) in etwa den gleichen Ausdehnungskoeffizienten aufweisen.

6. Anemometer nach zumindest einem der vorhergehenden Ansprüche,

**dadurch gekennzeichnet,**

daß das Substrat (36) aus mehreren Glasschichten zusammengesetzt ist, die mit einem Kleber verbunden sind, dessen Wärmeleitfähigkeit geringer als die der Glasschichten ist.

7. Anemometer nach zumindest einem der vorhergehenden Ansprüche,

**dadurch gekennzeichnet,**

daß der anströmhalterseitige Randbereich (46) des Materials von den vorzugsweise mäanderförmig verlaufenden Strombahnen (14, 50) elektrisch isoliert ist.

8. Anemometer nach Anspruch 7

**dadurch gekennzeichnet,**

daß das Material von dem anströmseitigen Randbereich (46) entfernt ist.

9. Anemometer nach Anspruch 7 oder 8,

**dadurch gekennzeichnet,**

daß die Breite des anströmseitigen Randbereichs (46) sich zu der Breite B des Substrats (12) vorzugsweise verhält wie 1 : 10.

10. Anemometer nach zumindest einem der vorhergehenden Ansprüche,

**dadurch gekennzeichnet,**

daß die Länge L und die Breite B des Substrats (12) jeweils um das 10- bis 500-fache größer als die Dicke D des Substrats ist.

11. Anemometer nach zumindest einem der vorhergehenden Ansprüche,

**dadurch gekennzeichnet,**

daß die Dicke D des Substrats (12) 40μm bis 150μm und die Länge L 10 bis 12mm und die Breite B 1 bis 33mm betragen.

FIG. 1

FIG. 2

FIG. 3

FIG.4

FIG.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | GB-A-2 171 800 (NIPPON SOKEN INC.) * Zusammenfassung; Seiten 2,3; Figuren 1,5 * | 1 | G 01 F 1/68 G 01 P 5/12 F 02 D 41/18 |
| A | | 11 | |
| Y | EP-A-0 235 362 (VDO ADOLF SCHINDLING AG) * Zusammenfassung; Spalte 3, Zeilen 37-40; Figur 1 * | 1 | |
| A | PATENT ABSTRACTS OF JAPAN Band 11, Nr. 305 (P-623)(2752), 6. Oktober 1987; & JP - A - 62 098219 (NIPPON SOKEN INC.) 07.05.1987 | 1 | |
| A | EP-A-0 235 358 (VDO ADOLF SCHINDLING AG) * Zusammenfassung; Spalte 4, Zeilen 38-41; Figur 1 * | 2 | |

**RECHERCHIERTE SACHGEBIETE (Int. Cl.5)**

F 01 F
F 01 P
F 02 D

Der vorliegende Recherchenbericht wurde für alle Patentansprüche erstellt

| Recherchenort | Abschlußdatum der Recherche | Prüfer |
|---|---|---|
| BERLIN | 08-03-1990 | VORROPOULOS G |